# EUROPEAN PATENT APPLICATION

(11) **EP 2 332 826 A1**
(43) Date of publication of application: **15.06.2011**
(21) Application number: 09814584.0
(22) Date of filing: 16.09.2009
(51) Int. Cl.: B63H 21/14, B01D 53/86, B01D 53/94, B63H 21/32, B63H 21/38, F01N 3/08, F01N 3/20, F01N 3/24

(54) **EXHAUST GAS PURIFYING SYSTEM FOR VESSEL ENGINE**

(30) Priority: 17.09.2008 JP 2008238192; 17.09.2008 JP 2008238193
(71) Applicant: Yanmar Co., Ltd., Osaka-shi, Osaka 530-8311 (JP)
(72) Inventor: MACHIDA Toru, Osaka-shi Osaka 530-8311 (JP); INOUE Tsuyoshi, Osaka-shi Osaka 530-8311 (JP); YOKOYAMA Tetsuya, Osaka-shi Osaka 530-8311 (JP); KOTOU Fumiya, Osaka-shi Osaka 530-8311 (JP); KIOI Kazuchika, Osaka-shi Osaka 530-8311 (JP)
(74) Representative: HOFFMANN EITLE
(86) International application number: PCT/JP2009/066132
(87) International publication number: WO 2010/032739

(57) **Abstract**

A marine vessel is loaded with a general fuel (a C heavy oil) tank (3) and a low sulfur fuel (an A heavy oil) tank (4). Further, an SCR catalyst (10) of a urea water spray type is arranged in an exhaust system of an engine (1), and a bypass exhaust gas pipe (16) through which an exhaust gas passes without passing the SCR catalyst (10) is arranged therein. A distance to a restriction target sea area is automatically computed by collating automatic vessel position detecting means (B) with a restriction map, the fuel is automatically switched to the low sulfur fuel from the general fuel in correspondence to an arrival at a restriction target sea area, and the exhaust gas is circulated to the bypass exhaust gas pipe (16) so as to stop a function of the SCR catalyst (10). A selection of an exhaust gas purifying state is automatically carried out.

## Description

### Technical Field

The present invention relates to an exhaust gas purifying system for an engine (a diesel engine) in a marine vessel, and more particularly to an exhaust gas purifying system of a marine vessel entering and leaving a sea area in which a harmful component discharge amount of an exhaust gas is restricted.

### Background Art

A diesel engine is generally mounted on a marine vessel, and a purification of a nitrogen oxide (NOx) included in the exhaust gas is required in the same manner as in a land vehicle. Further, since a heavy oil is used as a fuel in the diesel engine for the marine vessel, it is often the case that a sulfur oxide (SOx) is included in the exhaust gas, and accordingly a purification of the SOx is also required.

Further, as purifying means of the nitrogen oxide (NOx), an SCR catalyst purifying method using an urea as a reducing agent is generalized. In the SCR catalyst purifying method, there is used a honeycomb structure made of a material formed by a carrier of an oxide of Ti or the like carrying an active ingredient such as V, Cr or the like, and if an urea water is sprayed as a reducing agent water solution to an upstream side of the honeycomb structure, the urea water is hydrolyzed by a heat of the exhaust gas to produce an ammonia, the ammonia acts as the reducing agent on the NOx, and the NOx is decomposed into harmless nitrogen and water.

A C heavy oil is frequently used as a general fuel in the marine vessel in the light of a cost, however, the C heavy oil has such a nature that a content of a sulfur is great. Thus an A heavy oil having a less sulfur content Is used a countermeasure of the Sox. It is preferable to uniformly restrict regardless of an open sea or a closed sea from an environmental point of view, however, there is such an actual condition that the purifying technique of the SOx has not established yet, and that it is problematic in the light of an operational cost and an effective use of the C heavy oil to obligate the use of the A heavy oil. Therefore, as a harmonized countermeasure, the restriction sea area is defined with regard to the SOx in the present circumstances.

Therefore, the marine vessel entering and leaving the restriction target sea area is loaded with the C heavy oil having a high sulfur content and the A heavy oil having a small sulfur content as a fuel, and selects the used fuel in correspondence to the entering and leaving the restriction target sea area. Further, Patent Document disclosed a device using an A heavy oil having a high flow property at the beginning of an operation, and selecting a C heavy oil at a time when an engine warms up to some extent. The marine vessel entering and leaving the SOx restriction target sea area is loaded with the select device as disclosed in the Patent Document 1, and an operator (for example, an engine driver) selected the used fuel manually.

Further, in the diesel engine, as purifying means of the nitrogen oxide (NOx) included in the exhaust gas, the SCR catalyst purifying method using the urea as the reducing agent is generalized. In this SCR catalyst purifying method, generally the honeycomb structure made of the material formed by a carrier of an oxide of Ti or the like carrying an active ingredient such as V, Cr or the like is used, and if the urea water is sprayed as the reducing agent water solution to the upstream side of the honeycomb structure, the urea water is hydrolyzed by the heat of the exhaust gas to produce the ammonia, the ammonia acts as the reducing agent on the NOx, and the NOx is decomposed into the harmless nitrogen and water.

In the SCR catalyst purifying method, it is necessary to keep spraying the urea water to the exhaust gas. Accordingly, a tank for the urea water is attached to the vehicle, for example, in the land vehicle such as a track. Further, Patent Document 2 disclosed, as one kind of stand equipment for supplying the urea water to the vehicle, an urea water manufacturing device with a water supply gun of a supply car type structured such that a water and a raw material urea are thrown in the tank so as to be agitated.

### Citation List

### Patent Literature

Patent Document 1: Japanese Patent Application Laid-open No. 2002-227676
Patent Document 2: Japanese Patent Application Laid-open No. 2005-324134

### Summary of Invention

### Technical Problem

Present marine vessels are provided with automatic marine vessel position detecting means utilizing a global positioning system (GPS) or a satellite compass, and can accurately comprehend a position of its own marine vessel by an electronic marine chart using the automatic marine vessel position detecting means. However, a boundary of the restriction target sea area is artificially set. Not only it is necessary to previously know this as an information, but also there is such an actual condition that the boundary of the restriction sea area cannot be accurately understood unless a coast line is accurately comprehended, for example, in a restriction within certain sea mile from a coast. There is such a problem that a manual correspondence lacks an accuracy and a rapidity. Of course, a burden of the operator is great (since there is a case of passing through the restriction sea area at night or at stormy time, the burden is great).

Further, in the case of adding the SCR reducing catalyst for purifying the NOx or a cleaning and dust collecting device for removing a particulate matter as a purifying device directly acting on the exhaust gas, it is preferable to actuate them or stop the actuation thereof in correspondence to the fuel select, however, the conventional manual work lacks an accuracy, a reliability, and a rapidity, and there is a risk that they cannot observe the restriction or an expensive fuel is wasted.

In the case of a land vehicle such as a truck, since it is possible to replenish the fuel in a gasoline station, a garage or the like even if a capacity of an urea water tank mounted on the vehicle is small, it can be said that no particular problem is generated. However, on the other hand, in the case of a medium-sized or large-sized marine vessel which does not call at a harbor for several days to several months once starting on a voyage, such as a cargo ship or an ocean fishing ship, since a replenishing equipment such as the station is not provided on the ocean, it is necessary to procure an urea water in the ship.

As one of the means for procuring the urea water in the marine vessel, an urea water tank which can provide for a used amount after starting on a voyage till calling at a harbor is mounted. However, since it is quite usual for the marine vessel to keep driving the engine on the ocean once starting on a voyage, the engine for the marine vessel has an output which is far larger in comparison with the engine for the land vehicle, in addition to a circumstance that the used amount of the urea water per unit output is extremely larger in comparison with the land vehicle, and an absolute amount of the used urea water is great. Therefore, the urea water tank inevitably becomes huge, and the method of providing the urea water only by the tank has a poor actuality except a very partial marine vessel such as a short distance ferryboat.

As one of the other procuring means of the urea water in the marine vessel, the urea water manufacturing device described in the Patent Document 2 is arranged in an engine room. Since this method does not require a huge tank, it has a higher actuality in comparison with the method using only the tank. However, it is a great deal of labor hour to replenish the manufactured urea water in a water solution tank by a gun manually, and it is hard to adopt this method in the present marine ship in which a power saving progresses.

The present invention is made for improving the actual condition mentioned above.

### Solution to problem

The present invention includes several structures. A fist aspect of the invention relates to a broader concept, and a marine vessel in accordance with this invention is loaded with an engine capable of selecting a purifying state of an exhaust gas, and automatic vessel position detecting means capable of automatically specifying a current position, a positional relationship between a boundary of an exhaust gas restriction target sea area and its own position is specified on the basis of the automatic vessel position detecting means, and a purifying state of the exhaust gas in the engine is selected to a state in correspondence to a restriction, on the basis of the specified positional relation information.

In accordance with a second aspect of the present invention according to the first aspect, the selection of the purifying state of the exhaust gas is achieved by any one or more of a selection of a kind of a fuel, a selection of ON and OFF of one kind or plural kinds of purifying device, and a selection of a selective use of the plural kinds of purifying devices.

In accordance with a third aspect of the present invention according to the first or second aspect, the automatic vessel position detecting means is actuated on the basis of an electric wave transmitted from a satellite, a ground station or both of them, and the automatic vessel position detecting means is incorporated in a control device selecting the purifying state of the exhaust gas.

In accordance with a fourth aspect of the present invention according to the second aspect, a tank for a general fuel and a tank for a low sulfur fuel are provided in conjunction, an exhaust system of the engine has a main exhaust pipe to which a reducing agent adding type NOx purifying device is connected, and a bypass exhaust pipe which discharges the exhaust gas without passing through the NOx purifying device, and it is controlled in such a manner that the bypass exhaust pipe is closed and the reducing agent is added to the NOx purifying device in a state in which the general fuel is used, and the exhaust gas flows through the bypass exhaust pipe and an additive agent is not added to the NOx purifying device in a state in which the low sulfur fuel is used.

In accordance with a fifth aspect of the present invention, the exhaust gas purifying system according to the first aspect has a control means for selecting the purifying state of the exhaust gas in the engine on the basis of the information from the automatic vessel position detecting means, and the control means further stores a restriction sea area information about what kind of exhaust gas restriction is performed in the sea area, and controls in such a manner as to compute a distance to a boundary of the restriction sea area by comparing a position information detected by the automatic vessel position detecting means with the restriction sea area information, and define a target value of a distance to the boundary or a navigation time so as to form a preparation state for selection.

Further, the present invention aims at a marine vessel which is loaded with an engine, a water generating machine changing a sea water to a real water, and a water tank reserving the real water produced by the water generating machine, and an NOx included in an exhaust gas of the engine is purified by spraying a reducing agent water solution to a reducing catalyst provided in an exhaust pipe of the engine, and the reducing agent water solution is manufactured by mixing a solid-state raw material reducing agent such as a powder state or a granular state with the real water.

Further, in the invention in accordance with a sixth aspect, the exhaust gas purifying system has a raw material hopper in which the raw material reducing agent is thrown, and a mixing tank with agitating means for mixing the raw material reducing agent discharged from the raw material hopper with the real water so as to form a water solution, and the water tank and the mixing tank are connected by a raw water conduit line, and a water solution conduit line leading the reducing agent water solution to the reducing catalyst is connected to the mixing tank.

In accordance with a seventh aspect of the present invention, in addition to the sixth aspect, the exhaust gas purifying system is provided further with an output sensor for detecting an output of the engine or a concentration sensor for detecting an NOx concentration in the exhaust gas, a regulation tank for regulating a concentration of the reducing agent by diluting the reducing agent water solution supplied from the mixing tank by the real water is interposed in the water solution conduit line, the concentration of the reducing agent in the regulation tank is regulated on the basis of a signal from the output sensor or the concentration sensor, and a water is supplied to the regulation tank from a water tank.

In accordance with an eighth aspect of the present invention, the raw material reducing agent is made of an urea or an ingredient thereof and has a powder-like or granular outer appearance, the raw material tank is provided with drying means, and heating means is provided in the mixing tank and the regulation tank, in the sixth or seventh aspect. In accordance with a ninth aspect corresponding to a development example of the eighth aspect, the heating means uses the exhaust gas or the used cooling water of the engine as a heat source.

In accordance with a tenth aspect of the present invention, the mixing tank is provided with a water level sensor, the input of the raw material reducing agent from the raw material hopper to the mixing tank is controlled by shutter means, the raw water conduit line is provided with water supply means, and the water level sensor, the water supply means, and the shutter means are associated with each other in such a manner that the water supply means is actuated by a lower limit level detection signal by the water level sensor so as to supply water, the water supply means stops the actuation on the basis of an upper limit level detection signal by the water level sensor, and the shutter means opens during the water supply to the mixing tank, after the water supply or before the water supply, whereby the raw material reducing agent is thrown in, in the sixth aspect.

### Advantageous Effect of Invention

In the present invention, in the case that the marine vessel enters or leaves the exhaust gas restriction target sea area, the positional relationship between the boundary of the restriction target sea area and its own marine vessel is automatically determined, and it is possible to control in such a manner that the purifying state is automatically switched to the state which meet the restriction in the case of entering the restriction target sea area, and is automatically switched to the state in which the restriction is cancelled in the case of leaving the restriction target sea area. Accordingly, it is possible to accurately and rapidly meet the restriction relating to the ship exhaust gas, and it is possible to contribute to a power saving and a burden reduction by omitting a man power of a sailor.

The selection of the exhaust gas purifying state varies in accordance with the restriction contents, however, the restriction relating to the SOx can be executed by the selection of the fuel described in the second aspect in the present circumstances. In the case that the NOx countermeasure is not necessary due to the use of the low sulfur fuel, the selection of the fuel and the function ON and OFF of the NOx purifying device may be simultaneously carried out. In the present invention, it is possible to easily, accurately and rapidly carry out the plural kinds of the selection of as mentioned above.

The automatic vessel position detecting means can employ a GPS type position specifying system and a satellite compass. If the automatic vessel position detecting means is incorporated in the control device of the purifying system as described in the third aspect of the invention, a transmission system of the signal is simplified, and there is such an advantage that a reliability of an actuation becomes higher.

The reducing catalyst to which the reducing agent such as the urea is added is used for purifying the NOx, however, a generating amount of the NOx relates to the kind of the fuel, and there is a case that if the fuel having the low sulfur content is used, it is possible to meet the restriction value without using the reducing catalyst with regard to the NOx. The invention in accordance with the fourth aspect is provided in response to the actual condition mentioned above, and it is possible to prevent a loss of the output from being generated by a resistance caused by the exhaust gas passing through the catalyst, as well as it is possible to suppress an operation cost by suppressing the used amount of the reducing agent, by discharging the exhaust gas in a bypassing manner in the state in which the fuel having a high quality is used.

It is general that a certain degree of preparation time is necessary for selecting the fuel, and a certain degree of preparation time for confirming the addition of the reducing agent or the like is necessary for starting or stopping the operation of the purifying device using the reducing agent. In this regard, since it is possible to previously prepare the selection of the purifying means prior to entering or leaving the restriction sea area, by employing the structure in the fifth aspect, it is possible to more accurately achieve the reservation of an economic efficiency while achieving responsibility by securely clearing the restriction.

The medium-sized or large-sized marine vessel is generally loaded with the water generating machine for changing the sea water into the real water (the fresh water) for providing a living service water or the like, and the real water generated by the water generating machine is reserved in the water tank and is supplied to each of the used places via a conduit line. Further, in the present invention, since the reducing agent water solution is manufactured by mixing the powder-like or granular raw material reducing agent with the real water in the mixing tank, that is, since the reducing agent water solution can be manufactured as needed while making a voyage, the mixing tank is not necessarily huge, and can contribute to a space saving. Further, since the raw water used for the reducing agent water solution is supplied from the water tank, it is not necessary that the water generating machine for manufacturing the reducing agent water solution is newly provided or additionally provided, and accordingly a cost reduction can be achieved.

Further, since the reducing agent water solution manufactured by the mixing tank is automatically supplied to the catalyst via the water solution conduit line, a lot of man power is not necessary. In other words, the present invention also contributes to a power saving, and is accordingly preferable for a contemporary marine vessel.

In the diesel engine, the concentration of the NOx included in the exhaust gas becomes generally larger in proportion to the output. Accordingly, it is preferable to increase or decrease the concentration of the reducing agent water solution sprayed to the catalyst in proportion to the concentration of the NOx (it is possible to increase or decrease the spray amount in correspondence to the concentration, however, there is such an adverse effect that the water generation amount is increased).

Further, in the case of the sixth aspect of the present invention, it is possible to regulate the concentration by the mixing tank, however, it is bothersome in control by regulating the concentration by supplying a small amount of raw material reducing agent or dilution water, and there is a risk that the concentration regulation cannot be accurately carried out. On the contrary, if the structure in accordance with the seventh aspect is employed, there can be obtained such an advantage that the water solution having a desired reducing agent concentration can be easily manufactured by manufacturing the reducing agent water solution having a high concentration corresponding to (or higher than) the highest output (NOx concentration) in the mixing tank, and thereafter adding the dilution water by the regulation tank. Further, since the dilution water in the regulation tank is supplied from the water tank, it is not necessary to newly or additionally provide the water generating machine, which is advantageous in the light of a cost.

If the urea or the ingredient thereof is used as the raw material reducing agent as described in the eighth aspect, there is obtained such an advantage that an excellent safety is achieved. Further, the urea has such a nature that a hygroscopic property is high, and such a nature that a dissolution amount (a number of moles melting in a unit of water) is lowered on the basis of a reduction of the temperature of the water solution, while having such an advantage that the safety is high. However, since the raw material tank is provided with the drying means, and the mixing tank and the regulation tank are provided with the heating means in the eighth aspect, it is possible to prevent the concentration of the urea in the water solution from being lowered so as to contribute to an efficient NOx removal, as well as it is possible to prevent or suppress the drying of the raw material urea so as to contribute to a realization of the automatic mixing. In this case, the heating temperature is preferably about 40 °C.

In the case of the eighth aspect, an electric heater such as a sheathed heater may be used as the heating means of the mixing tank and the regulation tank, however, if the exhaust gas or the used cooling water in the engine is used as the heating means as described in the ninth aspect, there can be obtained such an advantage that a running cost is suppressed.

A specific example of a manufacturing method of the reducing agent water solution in the mixing tank is to manufacture the reducing agent water solution periodically at a predetermined time interval, for example, one time per one day and reserve it. However, this is negative in the light of the space saving since the mixing tank is enlarged in size, and is also negative in the light of the power saving since a man power is required. On the contrary, if the structure in accordance with the tenth aspect is employed, the water solution is automatically manufactured and replenished if its stock is reduced to a predetermined amount. Accordingly, it is not necessary to enlarge the mixing tank and the regulation tank more than necessary, and it is possible to greatly contribute to the power saving by omitting the man power as well as it is possible to promote the space saving.

### Brief Description of Drawings

Fig. 1 is a schematic block diagram showing an embodiment in accordance with the present invention;
Fig. 2 is a cross sectional view showing an example of an exhaust gas selector valve;
Fig. 3 is a conceptual view of a marine vessel under marine navigation;
Fig. 4 is a flow chart showing a control example;
Fig. 5A is a cross sectional view of a mixing tank; and
Fig. 5B is a plan cross sectional view taken along a line B-B in Fig. 5A.

### Description of Embodiments

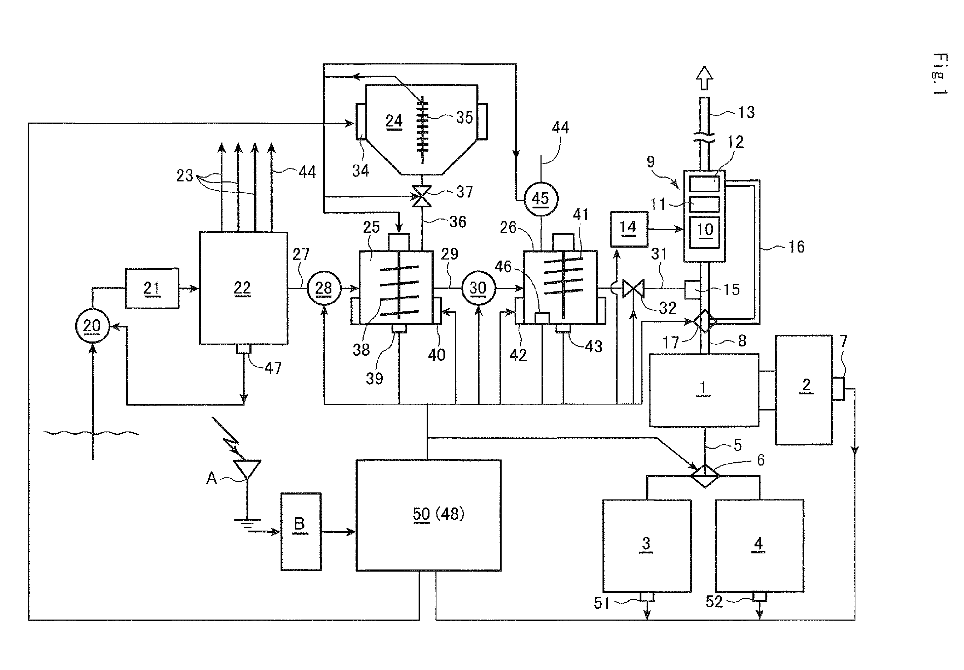

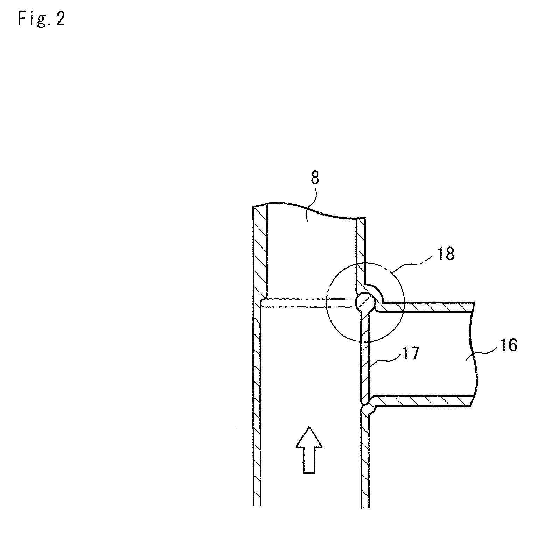

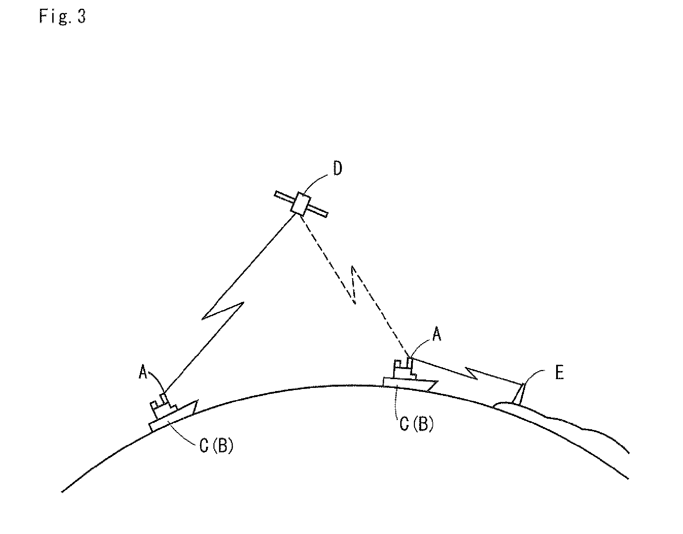

Next, an embodiment in accordance with the present invention will be described with reference to the accompanying drawings. Fig. 1 is a conceptual block diagram showing equipment and devices which are associated with the present invention, Fig. 2 is a view showing a specific structure of the device, and Fig. 3 is a conceptual view of a marine vessel under marine navigation. First of all, an arrangement and the like of the equipment and the devices will be described.

### (1) Basic structure around engine

As shown in Fig. 1, a marine vessel is provided with a diesel type engine 1, and a power generator 2 is connected to the engine 1. A fuel is supplied to the engine 1 from any one of a general fuel tank 3 and a low sulfur fuel tank 4. For simplifying the description, Fig. 1 shows a state in which a selector valve (a three way valve) 6 is interposed in a fuel conduit line 5 connecting both the fuel tanks 3 and 4 and the engine 1, however, actually it is general to connect a fuel injection system pipe to each of the tanks 3 and 4, and selectively use any fuel injection system pipe. In the same manner as the conventional one, a C heavy oil is an example of the general fuel, and an A heavy oil is an example of the low sulfur fuel.

In this case, the power generator in accordance with the present embodiment is provided mainly for driving a propulsion motor of the marine vessel, however, a screw may be directly driven by the engine 1. As a matter of course, the power generator 2 may be connected as a dedicated engine for obtaining an electric power for using the engine in the ship. An output sensor 7 is attached to the power generator 2. The output sensor 7 directly detects an output (or a load) of the power generator. However, since the output of the engine 1 is approximately the same as the output of the power generator 2, the output sensor 7 serves as output detecting means of the engine 1.

The engine 1 has a main exhaust gas pipe 8 connected to an exhaust gas manifold, and an NOx exhaust gas processing device 9 is connected to the main exhaust gas pipe 8. The NOx exhaust gas processing device 9 has an SCR reducing catalyst 10 which has been previously mentioned, a slip catalyst 11 for processing the NOx passing through the SCR reducing catalyst 10, and a silencer 12 in this order from an upstream side as seen from a flowing direction of the exhaust gas. A discharge pipe 13 is connected to the silencer 12. Here, the discharge pipe 13 can be conceptualized as a part of the main exhaust gas pipe 8, and in this case, the exhaust gas processing device 9 is interposed in the middle of the main exhaust gas pipe 8. However, in the present embodiment, a portion in an upstream side of the exhaust gas processing device 9 is conveniently defined as the main exhaust gas pipe 8.

A spray port 15 for spraying an urea water as an example of a reducing agent water solution is provided in the middle portion of the main exhaust gas pipe 8. Further, a blower 14 spurting an air toward the SCR reducing catalyst 10 is connected to the exhaust gas processing device 9. Further, a bypass exhaust gas pipe 16 is connected to an upstream side of the spray port 15 in the main exhaust gas pipe 8, and a terminal end of the bypass exhaust gas pipe 16 is connected to a portion of the silencer 12 in the exhaust gas processing device 9.

Although an illustration is omitted, a cleaning and dust collecting device for repairing a particulate matter may be connected to a downstream side of the exhaust gas processing device 9. Alternatively, an after burner may be connected.

A selector valve 17 for changing a flowing direction of the exhaust gas is provided in a connection portion between the main exhaust gas pipe 8 and the bypass exhaust gas pipe 16. A specific structure example of the selector valve 17 is shown in Fig. 2. In this example, the selector valve 17 is constructed as a tabular type, is structured such as to rotate around a support axis positioned in one end portion thereof, and is switched to an attitude of closing an inlet of the bypass exhaust gas pipe 16 and an attitude of closing the main exhaust pipe 8, by being rotated by an actuator 18 such as a motor or the like.

### (2) Supply system of urea water

The marine vessel has a water generating machine 21 for dipping a sea water by a first pump 20 so as to form a real water, and a water tank 22 for reserving the real water generated by the water generating machine 21. A lot of general water conduit lines 23 for supplying the water to a kitchen, a rest room, and the like are connected to the water tank 22. There is a case that a lot of various germs are mixed into the water which is only formed as the real water by the water generating machine 21. Accordingly, a process of sterilizing as a drinking water or a kitchen water is carried out, and in this case, the miscellaneous water before being sterilized and the sterilized drinking water are separately reserved in the water tanks. In this case, both tanks can be used as the water tank 22 in the present embodiment (since the urea water is not provided for drinking, the miscellaneous water may be used).

The marine vessel is further loaded with a raw material hopper 24 for throwing a granular urea corresponding to one example of the NOx purifying raw material reducing agent, a mixing tank 25 for mixing the raw material urea supplied from the raw material hopper 24 with the water so as to form an urea water, and a regulation tank 26 for regulating a concentration of the urea water manufactured by the mixing tank 25.

The mixing tank 25 and the water tank 22 are connected by a raw water conduit line 27, a second pump 28 for turning on and off the water supply is interposed in the raw material conduit line 27, the mixing tank 25 and the regulation tank 26 are connected by a first water solution conduit line 29, and a third pump 30 is interposed in the first water solution conduit line 29. The regulation tank 26 and the spray port 15 are connected by a second water solution conduit line 31, and a spray opening and closing valve 32 of an electromagnetic type or the like is interposed in the second water solution conduit line 31.

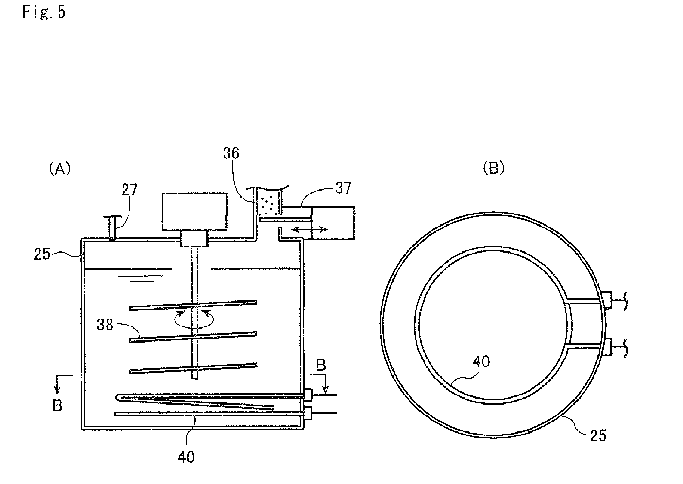

A drying device 34 is provided in the raw material hopper 24, and a discharge pipe 36 between the raw material hopper 24 and the mixing tank 25 is provided with shutter means 27 for opening and closing the discharge pipe 36. The drying device 34 of hot air type, a moisture absorbent type, and the like may be used. The raw material hopper 24 is provided with a capacity sensor 35 detecting an amount of the raw material urea. A specific structure of the shutter means 37 is also shown in Fig. 5A. The shutter means 37 is driven remotely by an actuator such as an electromagnetic solenoid or the like. The mixing tank 25 is provided with a rotary type agitating device 38, a water level sensor 39, and heating means 40. The agitating device 38 is driven by a motor.

In this case, in the discharge of the raw material urea by the raw material hopper 24, there are a type of keeping flowing as long as the shutter means 37 is open, and a measure type that a fixed amount is discharged if the shutter means 37 is actuated at one time, however, both the types can be employed in the present invention (the measure type is excellent in the light of easiness of control). Further, it is possible to periodically agitate the raw material urea so as to always hold the raw material urea in a granular state or a powder state, by providing an agitating device of an impeller type or the like in the raw material hopper 24.

As shown in Figs. 5A and 5B, the heating means 40 is arranged near a bottom of the mixing tank 25 in a state of being wound as a loop shape. Specifically, the heating means 40 can be constructed by a sheathed heater generating heat by an electric resistance. Alternatively, the heating means 40 may be constructed by a pipe through which an exhaust gas of the engine 1 and a used warm cooling water may be passed. Of course, the other types of heating means may be employed.

The regulation tank 26 may be provided with agitating means 41, heating means 42, and a water level sensor 43. Further, the regulation tank 26 and the water tank 22 are connected by a dilution water conduit line 44, and a fourth pump 45 is interposed in the dilution water conduit line 44 (a selector valve may be arranged in place of the fourth pump 45). Further, the regulation tank 26 is provided with a concentration sensor 46 detecting an urea concentration of the urea water. In this case, the mixing tank 25 and the regulation tank 26 may be constructed as a heat insulated structure. The water tank 22 is also provided with a water level sensor 47, the first pump 20 is automatically actuated if the water level comes down to a lower limit, and the first pump 20 is automatically stopped if the water level comes up to an upper limit.

### (3) Structure of control system

In the present embodiment, a control device 50 having a built-in central processing unit (CPU), memory, and the like is provided as a central device of the exhaust gas purifying system. The control device 50 can be manufactured and arranged as an exclusive product, or can be a commercially available personal computer or work station.

A predetermined program is incorporated in the control device 50, and a signal is input and output on the basis of an input signal. For example, the signal is input to the control device 50 from the capacity sensor 35 of the raw material hopper 24, the water level sensor 39 of the mixing tank 25, the water level sensor 43 of the regulation tank 26, and the output sensor 7 of the power generator 2. Two fuel tanks 3 and 4 are provided with capacity sensors (level meters) 51 and 52, and the signal is also transmitted to the control device 50 from these capacity sensors 51 and 52. Although an illustration is omitted, the fuel selector valve 6 and the exhaust gas selector valve 17 are provided with a sensor detecting an open state, and the signals from the sensors are transmitted to the control device 50.

Further, as shown by the conceptual view in Fig. 3, a marine vessel C is loaded with an antenna A receiving an electric wave from a satellite D and a ground station E, and an automatic vessel position detecting means B for specifying its own vessel position on the basis of the electric wave received by the antenna A, and the control signal is transmitted to the control device 50 from the automatic vessel position detecting means B. A position specifying device 48 is conceptualized as a part of the control device 50.

The drive of the following elements are controlled by the control device 50. In other words, the drive of the second pump 28, the agitating devices 38 and 41, and the heating means 40 and 42 of the mixing tank 25 and the regulation tank 26, , the shutter means 37, the fourth pump 45 of the dilution water conduit line 44, the spray opening and closing valve 32 of the second water solution conduit pipe 31, the fuel selector valve 6, the exhaust gas selector valve 17, and the blower 14 is controlled.

If the concentration of the NOx in the exhaust gas is high, an amount of the urea which is necessary for unit quantity of the exhaust gas is increased. Accordingly, in the mixing tank 25, the dilution water is loaded by manufacturing a water solution having an urea concentration corresponding to a supposed highest NOx concentration, and driving the fourth pump 45 on the basis of the signal from the output sensor 7 in such a manner that the urea water has an urea concentration necessary for purifying. If a predetermined concentration is achieved, the drive of the fourth pump 45 is stopped. In the case that it is necessary to make the concentration of the urea water dense, the urea water having the high concentration is loaded by driving the third pump 30.

The concentration of the NOx and the concentration of the urea water can be set to a fine adjustment type of sensitively adjusting the urea concentration in correspondence to a little concentration change of the NOx, however, it can be said to be practical to employ a zone adjusting type of sorting an output range of the engine 1 into a plurality of zones, for example, a low output, a medium output, and a high output, and sorting the urea concentration into a plurality of concentration areas such as a low concentration, a medium concentration, and a high concentration in correspondence to the output zone, thereafter changing the concentration area in correspondence to the change of the output zone. In this case, the temperature sensor is provided in the exhaust gas system, and in the case that the temperature of the exhaust gas rises excessively, the cold air is fed from the blower 14.

An information about what kind of exhaust gas restriction is carried out in the sea area (a restriction map) is stored as a digital data in a memory provided in the control device 50. This information may be constructed by bringing together the information in the entire globe, or may be limited to a limited navigation area (for example, only the Pacific Ocean or an area from certain east longitude to certain degree) in the case that the navigation area is limited. Since the restriction contents may be changed, it is preferable to update the restriction map data. In this case, the restriction map memory may be of an external medium type such as CD, or may be of a built-in type such as a hard disc.

In the present embodiment, the urea water is manufactured by the mixing tank 25, is fed to the regulation tank 26 so as to regulate the urea, and is sprayed into the exhaust gas from the spray port 15. First of all, it is necessary to supply the urea water without interruption. Accordingly, if the lower limit position is detected from the water level sensor 39 of the mixing tank 25, the water is supplied to the mixing tank 25 from the water tank 22 by driving the second pump 28 until the water level sensor 39 detects the upper limit position, the raw material urea is supplied at a predetermined amount to the mixing tank 25 by opening the shutter means 37, and is agitated by the agitating device 38. The raw material may be thrown in and the agitating device 38 may be started driving at the same time of, or before or after driving the second pump 28.

If the water level sensor 43 of the regulation tank 26 detects the lower limit position, the third pump 30 is driven, and if the water level sensor 43 detects the upper limit position, the drive of the third pump 30 is stopped. In the case that the drying means of the raw material hopper 24 and the heating means 40 and 42 of the mixing tank 25 and the regulation tank 26 are of an electric type, it is possible to control these means so as to turn on and off remotely, however, it is not necessary to switch them during the operation of the engine, normally.

Further, the opening and closing valve 32 of the second water solution conduit line 31 is usually kept in the open state, and is closed at a time when the exhaust gas flows in the bypass exhaust gas pipe 16 and the purification of the NOx is not necessary. It is possible to increase and decrease a spurting amount of the urea water in correspondence to the generation amount of the NOx (that is, on the basis of the signal from the concentration sensor of the NOx) by substituting the opening and closing valve 32 with a flow rate regulation valve, and it is actually rather preferable.

The regulation tank 26 can be always held in a full state by arranging the regulation tank 26 at a lower position than the mixing tank 25. In this case, the third pump 30 and the water level sensor 43 are not necessary. Further, the urea water can be naturally dropped from the mixing tank 25 to the regulation tank 26 by arranging the regulation tank 26 at a lower position than the mixing tank 25. In this case, a selector valve may be provided in place of the third pump 30.

### (4) Concrete example of control

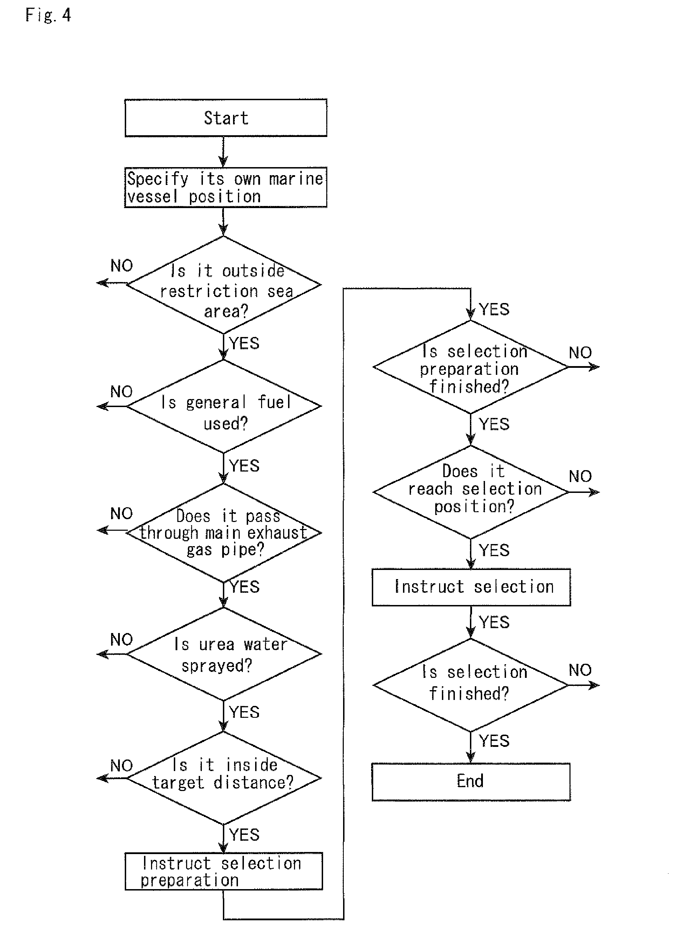

Next, a control example in a relationship to a restriction sea area will be described on the basis of a control flow in Fig. 4. The flow in Fig. 4 shows a case of entering a restriction target sea area from outside the restriction target sea area. First of all, if the system is started, the position of its own marine vessel is specified as a two-dimensional data of latitude and longitude by the automatic vessel position detecting means. Next, its own marine vessel position is collated (compared) with the restriction map, and is determined whether it is outside or inside the restriction target sea area. In the case that it is inside the restriction target sea area, a confirmation of the used fuel is determined. However, since the present embodiment assumes that it is outside the restriction target sea area, a description thereof will be omitted.

In the case that its own marine vessel is outside the restriction target sea area, it is confirmed whether or not the general fuel is used in the fuel, whether or not the exhaust gas passes through the main exhaust gas pipe 8 instead of the bypass exhaust gas pipe 16, and whether or not the spraying of the urea water is carried out. Whether or not the general fuel is used can be determined by the signal from the sensor provided in the fuel selector valve 6, whether or not the exhaust gas passes through the main exhaust gas pipe 8 can be determined by the signal from the sensor which is actuated by the opening and closing motion of the exhaust gas selector valve 17, and whether or not the spraying of the urea water is carried out can be determined by the signal from the sensor provided in the spray opening and closing valve 32.

In the case that the general fuel is not used, in the case that the exhaust gas does not pass through the main exhaust pipe 8, and in the case that the urea water is not sprayed, each of them is warned as an abnormal state, and the system stops until the countermeasure is executed. In the case that the general fuel is used, the exhaust gas processing device 9 is normally actuated, and the removal of the NOx is carried out, its own marine vessel position is compared with the restriction target sea area boundary position, a distance to the restriction target sea area is computed, and the distance is determined whether inside or outside a target distance which is previously defined as a distance (accurately time) required for switching the purifying system. The target distance is defined on the basis of a time and a marine navigation speed which are necessary for switching. The target distance may be set to a variable which is in proportion to the marine navigation speed (since the marine vesel reaches the boundary faster in the case of navigating at a high speed, it is necessary to set the target distance for preparation long).

In the case that the distance to the restriction target sea area is longer than the target distance, the system becomes an interruption state without carrying out any specific countermeasure, and if a predetermined time passes, it is determined again whether the distance to the restriction target sea area is inside or outside the target distance. In the case that the distance to the restriction target sea area becomes smaller than the target distance, the switch of the fuel and the switch of the spray stop of the urea water are prepared. As the preparation, for example, an alarm is set off so as to make a sailor execute an action requiring a manual work.

If a predetermined time passes after the selection preparing process, it is determined whether or not the selection preparation is finished. A sailor in charge sends signal by buton operation, for example, to notify that the preparation is done. In the case that the selection preparation finish button is pressed before the predetermined time passes, the operation progresses to the next step of determining whether or not the selection preparation is finished.

After entering the target distance, the distance to the restriction target sea area is computed at a short time interval or in real time, and if the marine vessel reaches a selection reach position (for example, a position before 1 to several sea mile from the boundary between the restriction target sea area and the restriction target outside sea area), the selection of the purifying device such as the selection of the fuel or the like is automatically carried out.

In the present embodiment, if the fuel is switched to the A heavy oil, the exhaust gas flows in the bypass exhaust gas pipe 16 and the spraying of the urea water is stopped. As a matter of course, it is possible to switch only the fuel and pass the exhaust gas through the main exhaust gas pipe 8 so as to carry over the purification of the NOx.

If the system change such as the selection of the fuel or the like is finished, the selection finish is reported on the basis of the signal from the sensor provided in the fuel selector valve 6, and the system is finished. In the case that the selection finish signal is not received, an alarm is set off in a state of clearly showing in what position a trouble is generated, and a cause of the trouble is removed manually.

The description of the control in the case of entering the restriction target sea area from the outside of the restriction target sea area was given above. In the case of getting out of the restriction target sea area to the outside of the restriction target sea area, and the basic flow is the same as mentioned above except that the matter to be determined is only inverted,. Further, the description is given by differentiating the system between the case of entering the restriction target sea area and the case of leaving the restriction target sea area, however, actually whether inside or outside the restriction target sea area is determined by specifying its own marine vessel position, and the system is branched largely into two on the basis of the result of determination.

### (5) Other

The present invention can be specified variously in addition to the embodiments mentioned above. For example, it is possible to change what kind of exhaust gas countermeasure is selected in correspondence to the scene, on the basis of the loaded devices and equipment, and the restriction contents. For example, in the case of being provided with the cleaning and dust collecting device for collecting the particulate matter, it is possible to operate the cleaning and dust collecting device in correspondence to the approach to the restriction target sea area. In the case of being provided with a purifying device working on the exhaust gas such as the catalyst type purifying device and the cleaning and dust collecting device, it is possible to differentiate the purifying capacity between inside and outside the restriction target sea area.

Further, it is possible to be selectively use three kinds or more kinds of fuels loaded on the marine vessel in correspondence to the restriction contents. Also, it is possible to change a mixing rate in correspondence to the entering and leaving the restriction target sea area in the case that plural kinds of fuels can be mixed and supplied to the engine.

Further, for example, it is often the case that the marine vessel is loaded with a plurality of engines. The present invention at least aims at one engine. In the case that the mixing tank is arranged at the lower position than the water tank, a simple selector valve can be employed as the water supply means.

### Reference Signs List

- A: antenna
- B: automatic vessel position detecting means
- 1: engine
- 2: power generator
- 3: general fuel tank
- 4: low sulfur fuel tank
- 6: fuel selector valve
- 7: output sensor
- 8: main exhaust gas pipe
- 9: exhaust gas processing device
- 10: SCR reducing catalyst for purifying NOx
- 11: slip catalyst
- 12: silencer
- 15: spray port of urea water
- 16: bypass exhaust gas pipe
- 17: exhaust gas selector valve
- 21: water generating machine
- 22: water tank
- 24: raw material hopper
- 25: mixing tank for manufacturing urea water
- 26: regulation tank for concentration of urea water
- 27: raw water conduit line
- 28: second pump serving as one example of water supply means
- 29,: 31 water solution conduit line
- 34: drying means (drying device)
- 38, 41: agitating means (agitating device)
- 39,: 43water level sensor
- 40, 42: heating means (heating device)
- 50: control device

## Claims

1. An exhaust gas purifying system of an engine in a marine vessel, comprising:
an engine capable of selecting a purifying state of an exhaust gas;
an automatic vessel position detecting means capable of automatically specifying a current position; and
the engine and the automatic vessel position detecting means being provided in the marine vessel,
wherein a positional relationship between a boundary of an exhaust gas restriction target sea area and its own position is specified on the basis of the automatic vessel position detecting means, and a purifying state of the exhaust gas in the engine is selected to a state in correspondence to a restriction, on the basis of the specified positional relation information.

2. The exhaust gas purifying system of an engine in a marine vessel as claimed in claim 1, wherein
the selection of the purifying state of the exhaust gas is achieved by any one or more of a selection of a kind of a fuel, a selection of ON and OFF of one kind or plural kinds of purifying device, and a selection of a selective use of the plural kinds of purifying devices.

3. The exhaust gas purifying system of an engine in a marine vessel as claimed in claim 1 or 2, wherein
the automatic vessel position detecting means is actuated on the basis of an electric wave transmitted from a satellite, a ground station, or both of them, and the automatic vessel position detecting means is incorporated in a control device for selecting the purifying state of the exhaust gas.

4. The exhaust gas purifying system of an engine in a marine vessel as claimed in claim 2, wherein
a tank for a general fuel and a tank for a low sulfur fuel are provided in conjunction, an exhaust system of the engine has a main exhaust pipe to which an NOx purifying device of reducing agent adding type is connected, and a bypass exhaust pipe which discharges the exhaust gas without passing through the NOx purifying device, and the exhaust gas purifying system is controlled in such a manner that the bypass exhaust pipe is closed and the reducing agent is added to the NOx purifying device in a state in which the general fuel is used, and the exhaust gas flows through the bypass exhaust pipe and an additive agent is not added to the NOx purifying device in a state in which the low sulfur fuel is used.

5. The exhaust gas purifying system of an engine in a marine vessel as claimed in claim 1, further comprising control means for selecting the purifying state of the exhaust gas in the engine on the basis of the information from the automatic vessel position detecting means, wherein
the control means further stores a restriction sea area information about what kind of exhaust gas restriction is performed in the sea area, and controls in such a manner as to compute a distance to a boundary of the restriction sea area by comparing a position information detected by the automatic vessel position detecting means with the restriction sea area information, and define a target value of a distance or a navigation time to the boundary so as to set a preparation state for selection.

6. An exhaust gas purifying system of an engine in a marine vessel comprising:
an engine;
a water generating machine for changing a sea water to a real water;
a water tank for reserving the real water produced by the water generating machine;
the engine, the water generating machine, and the water tank being loaded in the marine vessel;
an NOx included in an exhaust gas of the engine being purified by spraying a reducing agent water solution to a reducing catalyst provided in an exhaust pipe of the engine; and
the reducing agent water solution being manufactured by mixing a raw material reducing agent in solid-state, such as a powder state or a granular state, with the real water,
wherein the exhaust gas purifying system has a raw material hopper in which the raw material reducing agent is thrown, and a mixing tank with agitating means for mixing the raw material reducing agent discharged from the raw material hopper with the real water so as to form a water solution, the water tank and the mixing tank are connected by a raw water conduit line, and a water solution conduit line leading the reducing agent water solution to the reducing catalyst is connected to the mixing tank.

7. The exhaust gas purifying system of an engine in a marine vessel as claimed in claim 6, wherein
the exhaust gas purifying system is provided with an output sensor for detecting an output of the engine or a concentration sensor for detecting an NOx concentration in the exhaust gas, a regulation tank for regulating a concentration of the reducing agent by diluting the reducing agent water solution supplied from the mixing tank by the real water is interposed in the water solution conduit line, the concentration of the reducing agent in the regulation tank is regulated on the basis of a signal from the output sensor or the concentration sensor, and a water is supplied to satheid regulation tank from the water tank.

8. The exhaust gas purifying system of an engine in a marine vessel as claimed in claim 6 or 7, wherein
the raw material reducing agent is made of an urea or an ingredient thereof and has a powder-like or granular outer appearance, drying means is provided in the raw material tank, and heating means is provided in the mixing tank and the regulation tank.

9. The exhaust gas purifying system of an engine in a marine vessel as claimed in claim 8, wherein
the heating means uses the exhaust gas or the used cooling water of the engine as a heat source.

10. The exhaust gas purifying system of an engine in a marine vessel as claimed in claim 6, wherein
the mixing tank is provided with a water level sensor, the input of the raw material reducing agent from the raw material hopper to the mixing tank is controlled by shutter means, the raw water conduit line is provided with water supply means, and
wherein the water level sensor, the water supply means, and the shutter means are associated with each other in such a manner that the water supply means is actuated by a lower limit level detection signal by the water level sensor so as to supply water, the water supply means stops the actuation on the basis of an upper limit level detection signal by the water level sensor, and the shutter means opens during, before, or after the water supply to the mixing tank, whereby the raw material reducing agent is thrown in.
